# EUROPEAN PATENT SPECIFICATION

(11) **EP 0 783 592 B1**
(45) Date of publication and mention of the grant of the patent: **23.12.1998**
(21) Application number: 95932070.6
(22) Date of filing: 19.09.1995
(51) Int. Cl.: C22B 7/02, C22B 1/14, C22B 1/244

(54) **BONDED MEDIUM**
GEBUNDENER STOFF
SUBSTANCE AGGLOMEREE

(30) Priority: 19.09.1994 GB 9418849
(43) Date of publication of application: 16.07.1997
(73) Proprietor: Rees, Geraint, Llanelli, Dyfed SA15 5DJ (GB)
(72) Inventor: Rees, Geraint, Llanelli, Dyfed SA15 5DJ (GB)
(74) Representative: Austin, Hedley William
(86) International application number: GB9502223
(87) International publication number: WO9609416

(56) References cited:
- DE-A- 4 101 584
- US-A- 3 895 088
- US-A- 4 704 230
- US-A- 4 743 289
- US-A- 5 328 497

## Description

The present invention is concerned with bonded media.

Certain inorganic materials are sometimes present in a form in which they are difficult to handle and use. For example, basic oxygen steelmaking sludge (which is a waste product from the basic oxygen steelmaking process), contains up to 30% moisture and solids, including ferrous sulfide, iron oxide and various foundry additives, as well as other metals such as zinc.

Basic oxygen steelmaking sludge is generally considered to be a waste product, for which disposal is very expensive and difficult, partly because of its zinc content. We have now devised a way of using such basic oxygen steelmaking sludge, and other mineral and inorganic materials.

US 4704230 discloses a coherent particulate composite formed by blending particulate material with a binder containing lignosulfonate and urea; however US 4704230 does not disclose a method wherein the particulate material is mixed in an aqueous medium.

According to the present invention therefore, there is provided a method of forming thermally shock stable bonded solid materials, which comprises mixing a solid mineral or inorganic material in an aqueous medium with a lignosulfonate, treating the aqueous medium with a polyvalent or polydentate cationic complexing agent for lignosulfonate, with application of heat sufficient to maintain said lignosulfonate in fluid form, so as to produce an intimate mix of said complexing agent with said lignosulfonate and said mineral or inorganic material, and thoroughly mixing the resulting substantially dry material with a substantially dry further reagent comprising urea or a urea derivative, so as to cause the mix to agglomerate.

The resulting agglomerates can be shaped into, for example, briquettes (formed between shaped dies or the like) or pellets, or similar bodies formed by extrusion, pan agglomeration or the like.

The lignosulfonate may be used in the method according to the invention in the form of a solution (such as an aqueous solution). Alternatively, when the mineral or organic material is itself aqueous, the lignosulfonate may be used in powder form. The lignosulfonate may include any suitable cation(s); examples of suitable cations are ammonium, calcium, magnesium, sodium or potassium. Of these, calcium is most preferred.

The cationic complexing agent may comprise a transition metal or an alkaline earth metal; the metal is preferably of the fourth period of the Periodic Table of the elements, such as calcium, iron or the like. Of these, calcium is preferred, preferably in the form of the oxide (preferably as lime, which has the advantage of reacting with any free water in the mix).

When lime is used, it is preferably added to the aqueous medium in such an amount as to produce a saturated slaked mix, having a pH typically in excess of 10.

The further reagent is preferably added in powdered form and mixed with the saturated slaked mix by contra-rotating blade mixing or by tumbling, until the mix becomes plastic; this mixing may be carried out at a temperature ranging from ambient to up to about 80°C. The further reagent is preferably urea or a urea derivative (such as an alkyl urea).

When the mineral or inorganic material treated by the method according to the invention is basic oxygen steelmaking sludge, then the resulting shaped agglomerates can undergo direct reduction to a ferrous metal source, for addition to molten steel or iron in a steelmaking process. The direct reduction with carbon as reducing agent, which is typically carried out at about 900-1000°C, is advantageously without disintegration of the agglomerates because of their highly advantageous thermal shock resistance. Any zinc, furthermore, may be volatilised off from the shaped agglomerates during the direct reduction phase.

It is a particular advantage of the present invention, when applied to the process of forming agglomerates from basic oxygen steelmaking sludge or other inorganic or mineral materials, that highly thermal shock-resistant agglomerates can be formed. Such agglomerates are substantially dry and can be added to high temperature direct reduction processes or the like without any deleterious water evolution (which could otherwise have potentially devastating, explosive consequences). It is believed that this thermal shock resistance is beneficially associated with the formation of sulfonyl and sulfur bridges between the polymeric (lignin-based) backbones. Calcium sulfate formed in the slaking step is also believed to beneficially contribute to such thermal shock resistance. The sulfur present in the resulting agglomerates is stoichiometrically bonded in such a form that disadvantageous evolution of oxides of sulfur, or other noxious sulfur compounds, is substantially precluded.

The present invention will now be further illustrated, by way of example only, in the following Examples.

### Example 1

100 grams of basic oxygen steelmaking sludge, which contained 30% by weight of water, was partially dried, to a solids content of about 12% by weight.

10 grams of calcium lignosulfonate was added as a dry powder, with stirring. Lime (calcium oxide) was then added incrementally, so as to be slaked by the water present in the mix, resulting in a dry powder (the amount of lime being about 5 grams).

3 grams of powdered urea were then added and the mix was tumbled together at a temperature of about 60°C, so as to produce an agglomerated mass. The resulting mass (which had a pH in excess of 10) was formed into briquettes between shaped dies.

The resulting briquettes were highly stable to thermal shock, and could be added in the form of briquettes to a direct reduction process, as referred to above without disintegration.

### Example 2

200 grams of ferrous sulfide was supplied to a Bekin double-blade contra-rotating mixer; 20 grams of an aqueous solution of calcium lignosulfonate containing 50% by weight of water, was added to obtain a fairly wet mix.

10 grams of lime (calcium oxide) was then added incrementally, so as to be slaked by the water present in the mix, and the plastic mix was thereby converted to a free-flowing powder.

5 grams of powdered urea were then added and the mix was blended , so as to result in a volume increase in the mixer, and an increase in the power input to the mixer (from 65 to 95 watts), the resulting mix being plastic. The resulting mass (which had a pH of about 12) was formed into briquettes in a single floating ring die.

The resulting briquettes were highly stable to thermal shock, and could be added directly to molten ferrous sulfide, without disintegration. (In a test, thirty of the briquettes were thrown into molten ferrous sulfide; none broke and the briquettes floated and gradually melted in the ferrous sulfide.

## Claims

1. A method of forming bonded solid materials which are stable to thermal shock, which comprises mixing a solid mineral or inorganic material in an aqueous medium with a lignosulfonate, treating the aqueous medium with a polyvalent or polydentate cationic complexing agent for lignosulfonate, with application of heat sufficient to maintain said lignosulfonate in fluid form, so as to produce an intimate mix of said complexing agent with said lignosulfonate and said mineral or inorganic material, and thoroughly mixing the resulting substantially dry material with a substantially dry further reagent comprising urea or a urea derivative, so as to cause the mix to agglomerate.

2. A method according to claim 1, wherein the lignosulfonate is in the form of an aqueous solution.

3. A method according to claim 1 or 2, wherein the complexing reagent for lignosulfonate comprises a salt of a transition metal or a compound of an alkaline earth metal.

4. A method according to claim 3, wherein the metal is of the fourth period of the Periodic Table of the elements (such as calcium).

5. A method according to claim 3 or 4, wherein the calcium compound is the oxide.

6. A method according to any of claims 1 to 5, wherein the further reagent is urea added in powdered form and mixed with the saturated slaked mix by tumbling or by means of contra-rotating blades, until the mix becomes plastic.

7. A method according to claim 6, wherein the mixing is carried out at a temperature in the range from ambient to about 80°C.

8. A method according to any of claims 1 to 7, which further comprises shaping the agglomerates into briquettes, pellets or extruded bodies.

9. A method according to any of claims 1 to 8, wherein the mineral or inorganic material comprises basic oxygen steelmaking sludge and/or wherein the shaped agglomerates are added to molten steel or iron in a steelmaking process.

10. A method according to any of claims 1 to 9, wherein the mineral or inorganic material comprises ferrous sulfide.

## Patentansprüche

1. Verfahren zum Bilden gebundener, fester Materialien, die gegenüber einem thermischen Schock stabil sind, umfassend das Vermischen eines festen mineralischen oder anorganischen Materials in einem wässrigen Medium mit einem Lignosulfonat, das Behandeln des wässrigen Mediums mit einem mehrwertigen oder mehrzähnigen kationischen Komplexbildner für Lignosulfonat, unter Zufuhr von Wärme, die ausreicht, das besagte Lignosulfonat in flüssiger Form zu halten, um so ein inniges Gemisch des besagten Komplexbildners mit dem besagten Lignosulfonat und dem besagten mineralischen oder anorganischen Material herzustellen, und das gründliche Durchmischen des resultierenden, im wesentlichen trockenen Materials mit einem im wesentlichen trockenen weiteren Reagenz, welches Harnstoff oder ein Harnstoff-Derivat umfaßt, um so eine Agglomeration der Mischung zu bewirken.

2. Verfahren nach Anspruch 1, in dem das Lignosulfonat in Form einer wässrigen Lösung vorliegt.

3. Verfahren nach Anspruch 1 oder 2, in dem der Komplexbildner für Lignosulfonat ein Salz eines übergangsmetalls oder eine Verbindung eines Erdalkalimetalls umfaßt.

4. Verfahren nach Anspruch 3, in dem das Metall eines aus der vierten Periode des Periodensystems der Elemente ist (wie z. B. Calcium).

5. Verfahren nach Anspruch 3 oder 4, in dem die Calcium-Verbindung das Oxid ist.

6. Verfahren nach einem der Ansprüche 1 - 5, in dem das weitere Reagenz Harnstoff ist, das in gepulverter Form hinzugegeben und mit den gesättigten, gelöschten Gemisch durch Trommel-Mischen oder mittels gegenläufiger Schaufeln (Blätter) vermischt wird, bis das Gemisch plastisch wird.

7. Verfahren nach Anspruch 6, in dem das Vermischen bei einer Temperatur im Bereich zwischen der Umgebungstemperatur und ungefähr 80° C durchgeführt wird.

8. Verfahren nach einem der Ansprüche 1 - 7, weiter umfassend das Formen der Agglomerate zu Briketts, Pellets oder extrudierten Körpern.

9. Verfahren nach einem der Ansprüche 1 - 8, in dem das mineralische oder anorganische Material Sauerstoff(aufblas)-Stahl-Schlamm (sludge) umfaßt und/oder in dem die geformten Agglomerate zu geschmolzenem Stahl oder Eisen in einem Stahlherstellungs-Verfahren hinzugegeben werden.

10. Verfahren nach einem der Ansprüche 1 - 9, in dem das mineralische oder anorganische Material Eisensulfid umfaßt.

## Revendications

1. Procédé de formation de matériaux solides agglomérés qui sont stables au choc thermique, lequel comprend les étapes consistant à mélanger un matériau minéral ou inorganique solide dans un milieu aqueux avec un lignosulfonate, à traiter le milieu aqueux avec un agent complexant cationique polyvalent ou polydenté pour lignosulfonate, avec application d'une chaleur suffisante pour maintenir ledit lignosulfonate sous forme fluide afin de produire un mélange intime dudit agent complexant avec ledit lignosulfonate et ledit matériau minéral ou inorganique, et à mélanger complètement le matériau sensiblement sec obtenu avec un autre réactif sensiblement sec comprenant l'urée ou un dérivée d'urée pour permettre l'agglomération du mélange.

2. Procédé selon la revendication 1, dans lequel le lignosulfonate est sous la forme d'une solution aqueuse.

3. Procédé selon la revendication 1 ou 2, dans lequel l'agent complexant pour lignosulfonate comprend un sel de métal de transition ou un composé de métal alcalino-terreux.

4. Procédé selon la revendication 3, dans lequel le métal appartient à la quatrième période de la classification périodique des éléments (tel que le calcium).

5. Procédé selon la revendication 3 ou 4, dans lequel le composé de calcium est l'oxyde.

6. Procédé selon l'une quelconque des revendications 1 à 5, dans lequel l'autre réactif est de l'urée ajoutée sous forme pulvérulente et mélangée avec le mélange de chaux éteinte saturé par dessablage ou au moyen de lames tournant en sens inverse jusqu'à obtenir un mélange plastique.

7. Procédé selon la revendication 6, dans lequel on effectue le mélange à une température comprise entre la température ambiante et environ 80°C.

8. Procédé selon l'une quelconque des revendications 1 à 7, lequel comprend en outre l'étape consistant à façonner les agglomérats sous forme de briquettes, de pastilles ou de corps extrudés.

9. Procédé selon l'une quelconque des revendications 1 à 8, dans lequel le matériau minéral ou inorganique comprend une boue de préparation d'acier à base d'oxygène et/ou dans lequel les agglomérats formés sont ajoutés à l'acier ou au fer fondu dans un procédé d'élaboration de l'acier.

10. Procédé selon l'une quelconque des revendications 1 à 9, dans lequel le matériau minéral ou inorganique comprend du sulfure ferreux.
